# EUROPEAN PATENT APPLICATION

(11) **EP 2 219 259 A1**
(43) Date of publication of application: **18.08.2010**
(21) Application number: 10405026.5
(22) Date of filing: 11.02.2010
(51) Int. Cl.: H01M 12/06, H01M 4/04, H01M 8/18

(54) **System and process for producing electrical energy**

(30) Priority: 17.02.2009 CH 2462009
(71) Applicant: Bordonzotti, Ivan, 6835 Morbio Superiore (CH)
(72) Inventor: Bordonzotti, Ivan, 6835 Morbio Superiore (CH)
(74) Representative: Fabiano, Piero

(57) **Abstract**

Process and system for producing electrical energy from fuel, said system comprising:
- at least one metal-air battery (1) producing electrical energy comprising at least one metal electrode (2) adapted to oxidize by chemical discharge reactions of the said metal-air battery (1), at least one air electrode (4) and an electrolyte (3) based on an alkaline aqueous solution contacting said metal electrode (2) and said air electrode (3);
- at least one regenerator (50) adapted to receive metal oxide (40) deriving from the discharge reactions of the battery (1);
- said regenerator (50) comprising a gasification chamber (16) for receiving fuel and converting it into a hot gaseous flow containing CO and/or H₂;
- elements for making the said hot gaseous flow to contact the said metal oxides (40) for a time and at a temperature effective to regenerate by reduction and convert the metal oxides (40) into a regenerated metal in liquid state;
- extraction and casting devices (61;62;63;64) for extracting the said molten regenerated metal from the regenerator and casting it in the form of a fresh electrode of a size suitable for allowing it to be received by said metal-air battery (1);
- at least one metal-air battery for receiving said electrode made of regenerated and cast metal.

## Description

The present invention refers to a system and a process for producing electrical energy with high conversion efficiency starting from low- or medium-grade fuels.

Electrical energy generation starting from fuels in any form is presently performed essentially by making use of steam turbines, gas turbines, internal-combustion engines or other kinds of prime mover.

All of these systems are thus based on a thermodynamic cycle carried out in apparatuses suitable for converting the fuel energy into prime mechanical energy and, by the use of electrical generators or alternators, into electrical energy.

These technologies have as a major limitation the low conversion efficiency, i. e. they are capable of converting into electrical energy only a minimum amount of the energy contained in the fuel. This limitation is first of all due the basic laws of thermodynamics, which clearly state the maximum conversion efficiency of a thermodynamic cycle is the Carnot efficiency.

It is possible to obtain higher global electrical efficiencies only when more thermodynamic cycles in cascade are used, e. g. by employing the so-called combined cycles.

The typical example of combined cycle, which is becoming more and more widespread in the recent years, is the gas turbine - steam turbine system. In the plants adopting such a system there is normally a gas turbine, fed with natural gas or liquid fuel, followed by a boiler for producing steam subsequently used in a steam turbine. The heat required for producing steam in the abovementioned boiler is obtained from the exhaust fumes of the gas turbine. In this way, the heat of the exhaust fumes of a gas turbine that otherwise would be lost in the atmosphere, is "recovered" for producing further electrical energy, thus greatly increasing the fuel fraction converted into electrical energy.

An alternative solution for producing electrical energy from fuel is represented by the use of the so-called fuel cells.

An advanced version of the abovementioned cells is represented by metal-air batteries.

US 4,745,038 describes, for example, an integrated gasification air-iron electrical system capable of generating electrical energy form coal.

The system comprises a gasification furnace having at least one gasification reactor where a carbonaceous material contacts and reacts with a gas containing steam, to produce a reaction product such as a hot gas containing CO and H₂. The hot gas then contacts the discharged iron electrodes at a temperature over 450°C to convert the discharged iron compounds into iron compounds, and the recharged iron electrodes are then placed in the air-iron batteries to generate electrical energy.

US 4,448,858 describes batteries containing oxidized, discharged metal electrodes such as for example air-iron batteries. The batteries are charged by removing and storing the electrolyte in a reservoir and by pumping a reductant fluid such as formalin from a storage tank into the batteries in contact with the surfaces of the electrodes.

After a sufficient amount of iron hydroxide has been reduced to iron, the reductant fluid is drained and the electrolyte is returned to the battery from the reservoir where it was stored.

The Applicant has first of all noted that in a system such as that described in US 4,745,038 the battery electrode has a complicated construction, since large specific areas per unit volume are required for maximizing the contact with the electrolyte, increasing the oxidized surface and thus the production of electrical energy.

The Applicant has further noted that the electrodes described in the batteries of the abovementioned documents have a limited lifespan; in fact, an electrode of this kind tends to get exhausted and to lose its properties throughout the subsequent regeneration cycles. Therefore, the greatest care shall be taken during the regeneration phase to avoid breaking the electrode, which typically is very thin and brittle.

Finally the Applicant has noted that in systems such as those described above there are further problems in the regeneration; being the electrode actually a very fine "sponge", it tends to absorb all the impurities that are present in the hot gas used for regeneration. This aspect makes actually almost impossible to think of performing the regeneration using gases produced by biomass or coal gasificators, which are characterized by not negligible contents of dusts and other undesired compounds.

The Applicant has found that in a process for producing electrical energy from fuel using a metal-air battery with a metal electrode comprising a metal having a melting point lower than 450°C, a boiling point higher than 1500°C and low bond-breaking energy, at each regeneration cycle it is possible to have electrodes that are in every respect new and ensure the highest "performances" in the use of the battery 1.

The Applicant has further noted that in a system for producing electrical energy from fuel provided with a metal-air battery having a metal electrode as described above the regeneration process can be automated.

In a first aspect thereof, the invention refers to a system for producing electrical energy from fuel comprising:
- at least one metal-air battery adapted to produce electrical energy comprising at least one metal electrode adapted to oxidize by chemical discharge reactions of the battery, at least one air electrode and at least one electrolyte based on an alkaline aqueous solution contacting said metal electrode and said air electrode;
- at least one regenerator adapted to receive metal oxide deriving from the discharge reactions of the battery;
- said regenerator comprising a gasification chamber for receiving the fuel and converting it into a hot gaseous flow;
- elements for making the said hot gaseous flow to contact the said metal oxides for a time and at a temperature effective to regenerate by reduction and convert the metal oxides into a regenerated metal in liquid state;
- extraction and casting devices for extracting the said molten regenerated metal from the regenerator and casting it in the form of a fresh electrode of a size suitable for allowing it to be received by said metal-air battery;
- at least one metal-air battery for receiving said electrode made of regenerated and cast metal.

Preferably, the metal electrode comprises a metal having a melting point lower than 450°C, a boiling point higher than 1500°C and low bond-breaking energy.

Preferably, the system comprises a unit for separating the said metal oxides from stannate present in solution in the electrolyte of the said metal-air battery due to the chemical discharge reactions of the battery itself.

Even more preferably, the said unit for separating said metal oxides from the stannate comprises at least one autoclave.

Advantageously, the system has at least one device for feeding the metal oxides of the exhausted metal electrode into the reactor.

Preferably, the reactor comprises a reaction chamber positioned above and connected with said gasification chamber.

Even more preferably, the system comprises a device for feeding the fuel into the said gasification chamber.

According to an advantageous aspect, the system comprises at least one device for blowing air into said reactor.

Preferably, said at least one air blowing device comprises at least one duct for taking in air from outside, at least one heat exchanger for heating the air coming from outside and at least one duct for feeding the heated air from the said exchanger into the said reactor.

Advantageously, the system comprises at least one combustion fumes dedusting unit for extracting from combustion fumes (F) all of the solid particulate entrained therein.

Preferably, the dedusting unit comprises at least two separation cyclones of the inertial type in series, of which the first cyclone has a separation efficiency lower than the second cyclone.

According to another aspect thereof, the present invention refers to a process for producing electrical energy from fuel with high conversion efficiency starting from low- or medium-grade fuels in a system comprising at least one metal-air battery provided with a metal electrode having a melting point lower than 450°C, a boiling point higher than 1500°C and a low bond-breaking energy, at least one regenerator and at least one mould for a metal electrode, comprising the steps of:
a) extracting electrolyte from at least one metal-air battery, said electrolyte comprising dissolved stannates deriving from the discharge reaction of a metal electrode;
b) extracting metal oxides from said stannates;
c) feeding said metal oxides into a regenerator;
d) exposing said metal oxides to a hot gas flow containing CO and H₂ at a temperature between 800 and 1200°C for a time effective to regenerate by reduction and convert the metal oxides into regenerated metal in liquid state;
d) casting said molten metal in the form of an electrode of a size suitable for allowing it to be received by said metal-air battery;
e) inserting said cast electrode into said battery.

Preferably, the process for producing electrical energy comprises a step of preheating the metal oxides at a temperature between 120 and 250°C before introducing said metal oxides into said reactor.

Advantageously, the process for producing electrical energy comprises a step of generating the said gas flow containing CO and/or H2.

Preferably, the step of generating the said gas flow containing CO and/or H2 comprises the steps of:
- feeding fuel and a hot air flow into a gasification chamber;
- igniting the fuel;
- burning for a predetermined time the said fuel exposed to the hot air flow.

Preferably, the process for producing electrical energy comprises a step of extracting from combustion fumes coming from the regenerator the solid particulate entrained therein.

In a further aspect thereof, the invention refers to a metal-air battery comprising:
- at least a containment element;
- at least one electrolyte based on an alkaline aqueous solution contained in the said containment element;
- at least one metal electrode;
- at least one air electrode;
   characterized in that the metal electrode has a melting point lower than 450°C, a boiling point higher than 1500°C and low bond-breaking energy.

Preferably, the metal electrode essentially comprises tin.

Alternatively, the metal electrode essentially comprises lead Pb.

Advantageously, the air electrode comprises a multilayer plate element.

According to another advantageous aspect, the air electrode comprises a support frame for the multilayer plate element and means for removably fastening said frame to the container so that the multilayer plate element contacts the electrolyte in the said container.

Preferably, the multilayer plate element comprises a fabric of the "nonwoven" type adapted to contact the said electrolyte, a PTFE layer and an active portion comprising a wire net on which a coal layer is deposited, interposed between the PTFE layer and the nonwoven fabric layer.

Advantageously, the multilayer plate element is associated in-between to the said frame so that at least a layer portion projects at least 7 mm from said at least one frame.

According to another advantageous aspect, the electrolyte comprises potassium hydroxide KOH in aqueous solution.

Preferably, the electrolyte comprises NaCl in aqueous solution.

Further features and advantages of the invention shall become clearer from the detailed description of some preferred but not exclusive embodiments of a system and a process for producing electrical energy with high conversion efficiency starting from low- or medium grade fuels, according to the present invention.

Such a description shall be presented hereafter with reference to the accompanying drawings, provided only for indicating, and thus non-limiting, purposes, wherein:
- figure 1 is a schematic lateral view of a plurality of metal-air batteries according to the invention;
- figure 2 is a schematic top view of the plurality of metal-air batteries according to the present invention shown in figure 1;
- figure 3 is a schematic lateral view of the air electrode used in a metal-air battery according to the present invention;
- figure 4 is a sectional view of the air electrode of figure 3 taken along the line X-X;
- figure 5 is a schematic view of a first portion of the system for producing electrical energy with high conversion efficiency starting from low- or medium grade fuels according to the present invention;
- figure 6 is a schematic view of a second portion of the system for producing electrical energy with high conversion efficiency starting from low- or medium-grade fuels according to the present invention.

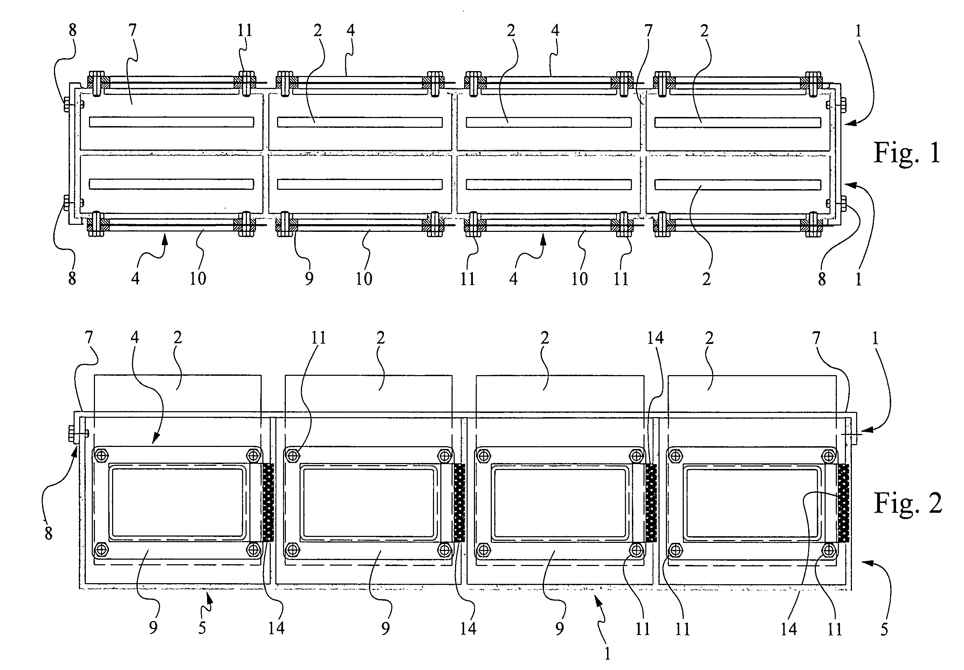

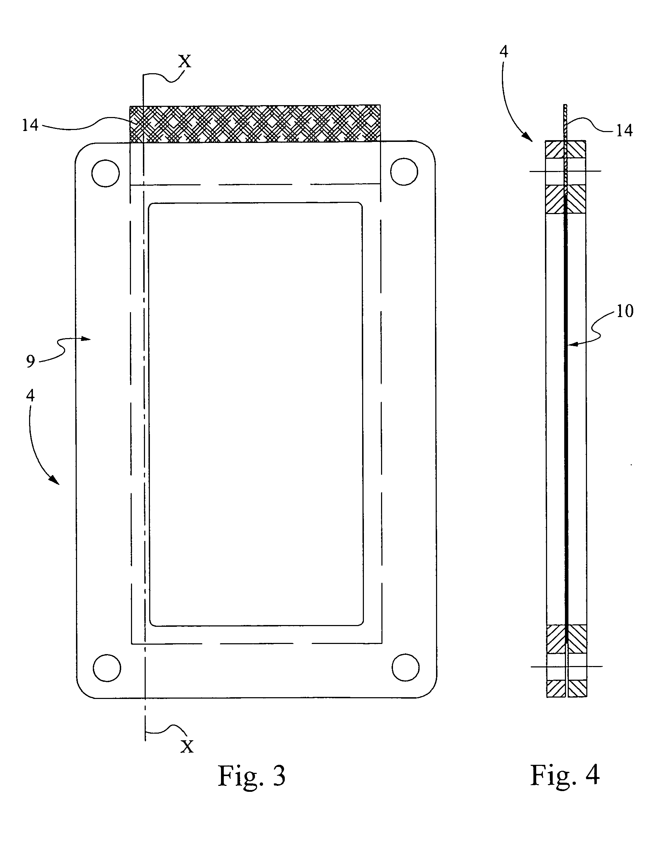

Referring to figures 1-4, a metal-air battery usable in the energy production system, according to the invention, is identified with reference numeral 1.

The battery comprises a metal electrode 2 at least partially placed into an electrolyte 3, based on an alkaline aqueous solution, contained in a suitable container 5 and an air electrode 4 externally secured to the container 5, but in contact with the electrolyte by means of a window formed in the container 5 itself.

Preferably, the container 5 is parallelepiped in shape with external dimensions of about 420 mm x 80 mm and a height of about 100 mm.

As mentioned, the container 5 has a window, at a side where the air electrode 4 is removably mounted, and an upper cover 7 also removably secured to the container at the upper edge thereof by means of fastening devices, such as screw and bolts 8.

Preferably, the container 5 is made of ABS or another non-conducting material which is stable and resistant to the electrolyte 3.

According to an advantageous aspect, the electrolyte 3 comprises potassium hydroxide KOH in aqueous solution.

Preferably, for the electrolyte 3 a 30-50 wt % aqueous solution of potassium hydroxide KOH alone is used.

An example of aqueous mixture for the electrolyte 3 could be:
- 10-50 vol. % of a 45 wt % KOH aqueous solution;
- 50-90 vol. % of H2O.

The Applicant has however noted that the best compromise between porosity of the oxide surface layer and performance of the metal electrode 2 is obtained if a 15-25 wt % aqueous solution of potassium hydroxide KOH alone is used for the electrolyte 3.

Alternatively, the electrolyte 3 comprises NaCl in a saturated aqueous solution.

In the latter case an example of aqueous mixture for the electrolyte 3 could be:
- 20-25 vol. % of a 45 wt % KOH aqueous solution;
- 0-10 vol. % of a NaCl saturated aqueous solution;
- 65-80 vol. % of H2O.

Although the addition of sodium chloride NaCl reduces the initial performances, it allows on the other hand keeping permeable the oxide surface layer, which in any case develops on the electrodes, so that the battery is able to maintain good "performances" for a longer time.

The tests carried out showed that in this case metal electrodes having a thickness of 3 mm or more can be used. The battery 1 with such a thickness for the metal electrodes 2 maintained almost unchanged "performances" over a long period of time.

The air electrode 4 comprises a multilayer plate 10 having dimensions slightly larger than the window formed in the container 5. The multilayer plate 10 comprises a support frame 9, to which the multilayer plate element 10 is associated in-between, and removable fastening means 11 of the said frame 9 to the said container 5. The removable fastening means 11, e. g. in the form of screws, secure the frame 9 to the said container 5 so that the multilayer element 10 contacts the electrolyte 3 contained in the container 5.

Preferably, the said support frame 9 is made of plastic material.

Advantageously, the multilayer plate element 10 comprises a layer made of a fabric of the "nonwoven" type adapted to contact the electrolyte 3, a PTFE layer and an active portion comprising a metal net 14 on which a coal layer is deposited, interposed between the PTFE layer and the nonwoven fabric layer.

Preferably, the multilayer plate element 10 is enclosed by the frame 9 so that at least a portion 13 of the multilayer plate 10 projects at least 7 mm from said frame, so as to make easier the electrical connection.

In particular, the electrical connection takes place through the metal grid of the active portion projecting from the said frame 9.

According to an important aspect of the present invention, the metal electrode 2 comprises a metal having a melting point lower than 450°C, a boiling point higher than 1500°C and low bond-breaking energy.

In the present invention the expression bond-breaking energy is used to indicate the energy required for thermochemically regenerate the metal electrode exposed to a gaseous flow substantially of high temperature carbon monoxide and/or hydrogen.

In other words, keeping conditions the same, the lower the temperature for the reduction reaction of the metal oxide, exposed to a gaseous flow substantially of carbon monoxide and/o hydrogen, the lower the energy required for thermochemically regenerate the metal electrode and thus the bond-breaking energy.

The low melting point of the metal forming the metal electrode 2 further allows, as it shall become apparent in the followings with reference to the regeneration process, the melting, i. e. the passage into the liquid state, of the oxides and hydroxides deriving from the reduction of the electrode 2 and the formation by casting of a new electrode 2.

The melting of the electrode has two main advantages:
➢ at each regeneration cycle electrodes that are new in every respect and that ensure the highest "performances" of use in the battery 1 become available;
➢ the automation of the regeneration process.

The boiling point higher than 1500°C ensures, on the other hand, that vaporization phenomena do not occur. These would in fact cause the loss of metal which gets entrained in the gaseous flow during regeneration, together with problems in controlling the emissions to the atmosphere.

As it shall become apparent in the followings, the regeneration takes place thermochemically and thus at high temperatures, equal to or higher than 1000-1100°C.

At such temperatures the regenerated metal can be present in gaseous flows and it is therefore important that vaporization phenomena do not occur which would cause the abovementioned problems of losing the metal which gets entrained in the gaseous flow and of controlling the emissions to the atmosphere.

The metal elements which are used in the battery 1 initially have preferably elongate shapes with constant cross-section. More preferably, they are rectangular in shape and have the face with larger area parallel to the air electrode in order to maximize the ionic exchange between the two. The structure of the element must be as porous as possible in order to maximize the active surface.

However, other configurations which allow the surface of the electrode 2 contacting the electrolyte 3 to be increased are possible, e. g. configurations with undulations, fins, holes, or the like.

Preferably, the metal of the metal electrode 2 essentially comprises tin Sn.

In fact, the Applicant has found that tin, having a melting point at about 230°C, a boiling point at about 2270°C and low bond-breaking energy, solves the above mentioned problems.

Alternatively, the metal of the metal electrode essentially comprises lead Pb.

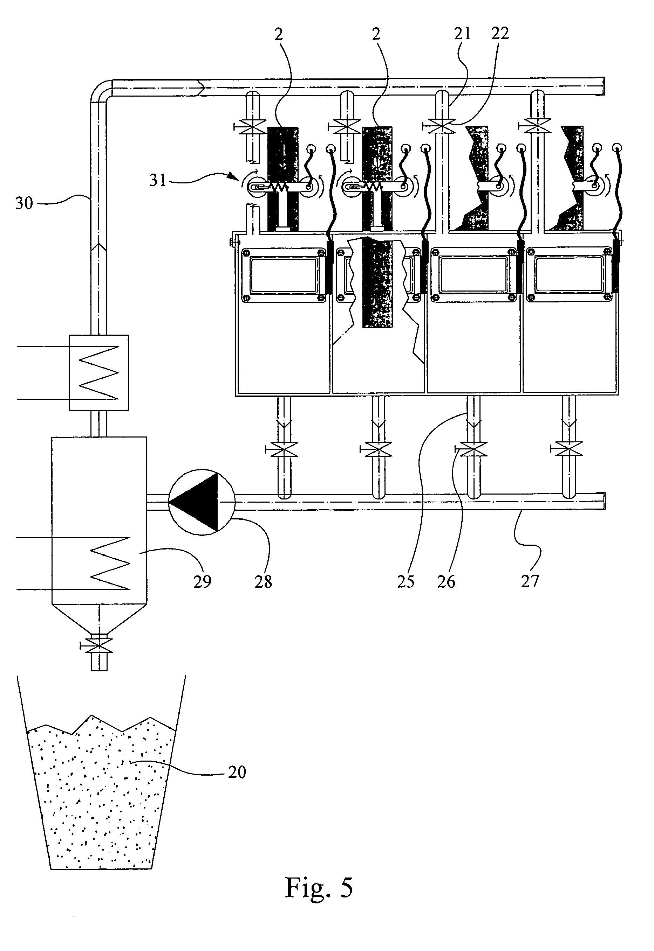

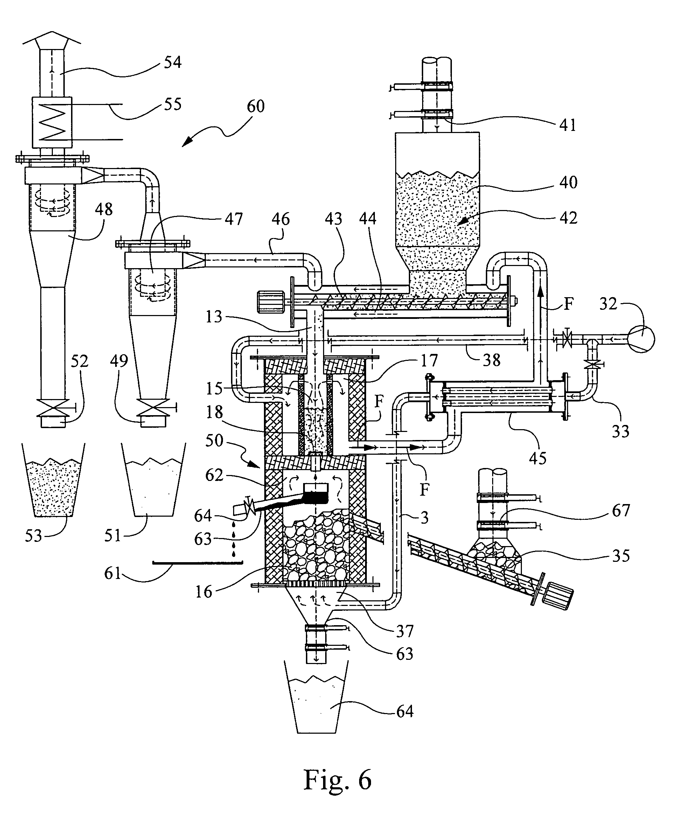

A first and a second portion of a system for producing electrical energy with high conversion efficiency starting from low- or medium-grade fuels according to the present invention are shown in figures 5 and 6, respectively.

In particular, in figure 5 a plurality of metal-air batteries 1 of the type described above, connected in series, are shown.

Each battery has at its bottom a discharge duct 25 with a discharge valve 26. Both the discharge duct 25 and the discharge valve 26 are made of a non-conducting material, such as to avoid to short-circuit the battery 1 connected thereto.

Downstream the valves 26, the discharge ducts 25 merges into a single manifold 27 connected with a pump 28, preferably of the high-head type. Downstream the pump 28 there is installed a unit 29 for separating the oxides from the stannate 29, preferably in the form of an autoclave.

Each battery 1 further has at its cover 7 a duct 21 with a valve 21. Also in this case, both the duct 21 and the valve 22 are made of a non-conducting material, such as to avoid to short-circuit the battery 1 connected thereto. Each duct 21 with a valve 22 merges into a duct 30 also connected with the autoclave 29.

In order to keep always perfectly balanced the electrical current generated by each single battery 1, thus maximizing both the overall yield of the battery 1 and its electric voltage, each battery 1 has movable support 31.

The movable support 31 holds the metal electrode 2 in a vertically slidable way.

The movable support 31 has both a holding function, the function of dipping the metal electrode 2 into the electrolyte 3 while it gets consumed, and the function of electrically connecting the metal electrode 2 with the battery circuits.

During operation, the metal electrode 2 gets consumed, generating oxides the chemically reacts with the electrolyte to form stannates. As the electrode 2 is consumed, it shortens, at the same time reducing the electrical current generated by the battery 1. Such a reduction is compensated by acting on the movable support 31.

Depending on the use of an electrolyte based on sodium hydroxide (NaOH) or based on potassium hydroxide (KOH), respectively sodium stannate (Na2SnO3 or Na2Sn(OH)6) or potassium stannate (K2SnO3 or K2Sn(OH)6) will be formed. These compounds are water-soluble and thus remain in solution. The conversion reaction of metal oxides, generated by the reaction at the anode, into stannates has several advantages:
- the oxides, which, acting as an insulator between the electrode and the electrolyte, would hinder the electricity generation, are continuously removed from the surface of the electrode;
- the tin is found again in oxidized form but in solution; the extraction thereof from the battery is very easy and can be automated.

However, the conversion reaction of metal oxides into stannates can consume the electrolyte, since it takes active part in the reaction. Thus it comes out that the metal-air battery is fully discharged either when all the metal has been consumed or when all the electrolyte has been consumed. If the available volume of electrolyte is not sufficient to consume all the metal, it has to be refilled, e. g. by means of systems for external recirculation of the same.

As shown, the exhausted electrolyte essentially comprises stannate in solution.

At this point it is necessary to extract the metal oxides from the stannate solution and at the same time to regenerate the electrolyte by recreating the initial alkali hydroxide.

To this purpose the system is provided with a unit for separating the metal oxides from the stannate solution present in the said metal-air battery due to the chemical discharge reactions of the said metal-air battery.

Preferably, the said unit for separating the metal oxides from the stannate solution comprises at least one autoclave 29, in which the exhausted electrolyte coming from the at least one metal-air battery is heated at a predetermined temperature and pressure and for a predetermined time.

By the treatment in the autoclave 29 it is possible to directly convert the stannates contained in the exhausted electrolyte into tin oxide (SnO2) and potassium (KOH) or sodium (NaOH) hydroxide.

Tin oxide is not soluble and precipitates in the solution, while the hydroxide remains in solution.

By filtering the solution it is then possible to separate the tin oxide from the liquid: the oxide will be then treated in the regenerator, as shown in the followings, to form fresh tin, while the filtered liquid will be used as fresh electrolyte for the battery.

An example of operating parameters for the autoclave 29 according to the present invention is as follows:
temperature = 235°C;
pressure = 30 - 35 bar;
stay time in the autoclave at the abovementioned temperature and pressure = 30-60 min.

With these parameters it is possible to recover 60% of tin and 65% of KOH contained in the stannates present in solution in the exhausted electrolyte. The fraction that is not recovered remains in the electrolyte and is sent again to the battery, without any inconvenience to the operation thereof: it will be extracted in the same proportion at the next cycle in the autoclave 29. Throughout the subsequent cycles the concentration of the stannates in the electrolyte will gradually increase up to an equilibrium.

The system with the autoclave is simple, requires only heat to be available and does not involve the use of external substances that could in time contaminate the tin oxide or the liquid solution.

It is however possible to use other devices or processes for extracting the metal oxides from the stannate solution present in the metal-air battery due to the chemical discharge reactions of the battery itself.

As an example, it is possible to use a bubbling through process, such as that described in the US patent No. 1811142. In this case, a suitable gas is bubbled through the exhausted electrolyte in order to separate the metal oxides; this operation is then possibly followed by further chemical operations such as causticization.

In figure 6 the second portion of the system for producing energy according to the present invention is shown.

The metal oxides 40 produced in the batteries 1 and extracted by means of the passage through the unit for separating the metal oxide from the stannate are let into the second portion of the system.

The inlet is kept airtight by means of a mechanical leak-tight system 41, consisting of a double gate device (as indicated in figure 6) in which the gates can be opened alternately, or else of a stellar valve.

The metal oxides 40 are then collected in the container 42, from where they are then extracted by means of the screw feeder 43. Said crew feeder 43 is placed in a duct connected with the container 42 and, downstream, with a regenerator 50.

The screw feeder 43 is further connected upstream with a heat exchanger 45 connected with the said regenerator 50 so as to convey the still hot combustion fumes F produced to the screw feeder 43 for the regeneration process.

Such fumes F allow, while cooling down, the oxides and hydroxides to be preheated before starting the actual regeneration process, thus increasing the thermal efficiency of the system.

Through the duct 46 the screw feeder 43 is also connected with a dedusting unit 60.

The dedusting unit 60 is active for extracting from the combustion fumes F all of the entrained solid particulate. Preferably, the dedusting unit 60 consists of two cyclones 47, 48 in series, which allow performing an inertial separation. However, also other dedusting elements can be employed, e. g. electrostatic separators. The choice essentially depends on the dedusting degree (or efficiency) to be obtained.

The first cyclone 47, which has a separation efficiency lower than the second cyclone 48, serves for extracting from the fumes F the coarser and higher density dust, mainly consisting of oxides and already regenerated metal entrained in the fumes F. Such dust is extracted from the bottom of cyclone 47 through an airtight system 49 and collected in the container 51. Such dust will be then fed again in the regeneration system by mixing it with the metal oxides 40 which enter the regenerator 50.

The second cyclone 48 serves for extracting from the fumes F the remaining particulate, consisting of finer and lower density dust, thus ashes contained in the fuel used for the regeneration. Such ashes are extracted from the bottom of cyclone 48 through an airtight system 52 and collected in the container 53. These will be then disposed of in a dump site.

The fumes F downstream the dedusting unit can then be sent to the atmosphere through the chimney 54.

Before being sent to the chimney 54, such fumes F are preferably made to flow through an exchanger 55, which allows the still relevant thermal content of the abovementioned fumes F to be recovered.

The heat recovered in this way is preferably used for operating the autoclave 29. In this way the use of external heat sources is avoided, with advantage to the overall system efficiency.

The regenerator 50, adapted to receive the metal oxides 40 which are produced by the metal electrode 2 as it gets oxidized due to the discharge reactions of the battery 1 and are separated by the stannate, comprises a cylindrical reaction chamber 15, a post-combustion chamber 17 concentric with the reaction chamber 15 and a gasification chamber 16.

In the preferred embodiment shown in figure 6, the reaction chamber 15 is positioned above the combustion chamber 16 and is connected therewith through a metal grid 18 with holes of predetermined dimension positioned at the bottom of the reaction chamber itself.

Preferably, the holes of the grid 18 have a diameter larger than or equal to 3 mm.

The reaction chamber 15 is connected with the screw feeder 44 through duct 13 for receiving the oxides and hydroxides 40 coming from the metal-air batteries 1, and with an air blowing system.

In the blowing system air is blown through duct 33 from outside to the post-combustion chamber 17.

At the end opposite the reaction chamber 15 the duct 33 is provided with a fan 32, preferably having variable speed.

The fan 32 allows the flow rate of the blown air to be adjusted. The air to be blown is controlled as a function of the desired temperature for the process, which is about 1000-1100°C. Temperature measurement is performed by means of devices for determining the same, such as for example a thermometer, not shown in the figure, installed in the chamber.

The gasification chamber 16 is internally lined with refractory material suitable for withstanding the high temperatures arising in it, that can even reach 1200°C.

The gasification chamber 16 is provided with a device for collecting and extracting the molten regenerated metal falling from the reaction chamber through the grid 18.

The collecting and extraction device is provided with a collecting basin 62 arranged immediately below the grid 18 and with a duct 63 with a valve 64 to bring the molten metal to a mould 61 external to the regenerator 50 for casting a new electrode 2.

The gasification chamber 16 is connected with devices 35, 67 for feeding the fuel, such as for example a screw feeder 35 connected with a mechanical leak-tight inlet system 67, consisting of a double gate device (as indicated in figure 6) in which the gates can be opened alternately, or else of a stellar valve.

Instead of the screw feeder 35 also other fuel conveying devices could be considered, depending on the kind of fuel used, such as for example scraper or belt conveyors.

The fuel used in the process according to the present invention can be pit coal, charcoal, biomass (e. g. wood) and any other fuel material containing carbon in its composition.

The gasification chamber 16 is connected with the air blowing system 33,36,38,45,32.

In particular, in the air blowing system the duct 36 is connected with the exchanger 45 and the latter is connected through the duct 33 with the fan 32 described above.

Below the combustion chamber there are a grid 37 and a leak-tight discharge opening 63 for collecting the fuel ashes.

In particular, the ashes contained in the exhausted fuel fall through the grid 37 and are extracted through the leak-tight discharge opening 63 and collected in the container 64, for then being disposed of in a dump site.

The fresh metal electrodes produced with the process of the present invention in the moulds 61 are inserted into the battery 1 from above, each being secured to the respective movable support 31, passing through the cover and remaining partially dipped into the electrolyte 3 of the battery 1. The movable support 31 dips the metal electrode 2 into the electrolyte 3 as it gets consumed due to the discharge reactions of the battery 1.

In particular, referring to a metal electrode made of tin, the following reactions take place in the battery 1:

| | |
|---|---|
| 2H2O + 02 + 2e- → 4 OH | at the air electrode |
| Sn + 4OH → Sn(OH)4 + 4 e- | at the metal electrode |
| Sn + O2 → Sn(OH)4 | globally |

As previously mentioned, the oxidized tin interacts then with the hydroxide contained in the electrolyte to form stannates which dissolve into the electrolyte. An example for this reaction, considering a potassium hydroxide (KOH) solution as electrolyte, is

Sn(OH)4 + 2KOH → K2Sn(OH)6 or Sn(OH)4 + 2KOH → K2SnO3.3H2O

As it can be clearly noted, such a reaction involves the consumption of potassium hydroxide. Thus the battery is discharged as soon as the first of the following conditions occurs:
- all the available tin has been consumed
- all the hydroxide of the electrolyte has been consumed

The circulating electrons supply the electromotive force and thus the electrical energy. The cell voltage obtained is practically between 0.8 and 1.0 volt.

The exhausted product of the metal electrode consists of the stannates dissolved in the exhausted electrolyte. The stannates are then treated by one of the previously mentioned processes where the tin oxide and the hydroxide of the electrolyte are formed.

When the amount of metal oxides dissolved in the electrolyte of the battery is such that the electrical and/or chemical properties of the battery are excessively lowered, an extraction sequence is performed, one battery at a time to avoid short-circuiting the battery, consisting of:
opening the valve 26 and the valve 22 associated with one battery 1;
switching on the pump 28 for establishing a circulating flow which remove the electrolyte from the battery and brings it to the autoclave 29.

The pump and the related valve sequence are operated at intervals and for a short time. This allows the electricity consumption of the system to be kept low compared to electricity produced by the battery.

Preferably, the pump 28 shall be dimensioned so that its head has a value not lower than the pressure required in the autoclave.

As anticipated, once the electrolyte has been extracted from the battery, it is sent to the autoclave 29, where it is heated and remains for a time necessary to allow the oxides to be separated.

The oxides 40 thus settle at the bottom of the autoclave from where they will be extracted, by means of a suitable discharge opening when the pump 28 is switched off.

The separation of the metal oxides from the electrolyte can be performed also in other ways, such as for example by means of arrangements of filters with countercurrent washing well known and used by those skilled in the art.

The extracted material is ready to undergo the regeneration process.

Before the regeneration process, the metal oxides 40 extracted from the autoclave can be washed with distilled water till they are completely clean. First of all the oxides are mixed with water by stirring, then the metal oxides 40 are separated from the water by filtration with fabric filters (resistant to alkali) or, preferably, candle filters.

At this point the metal oxides 40 can be dried using, in the case of an industrial plant, the waste heat produced by the regenerator, or else other commonly used means.

The water deriving from washing and filtration of the metal oxides 40 then essentially contains the salts forming the electrolyte (KOH and NaCl). By partially evaporating the water, through methods already described in the previous section, it is possible to restore the electrolyte to the desired concentration, the proportions between the salts being unchanged compared to the initial electrolyte. Otherwise it is possible to recover the salts by totally evaporating the water, dissolving the salts in ethyl alcohol, separating by filtration the sodium chloride (NaCl, not soluble in the ethyl alcohol) and recovering the potassium hydroxide (KOH, soluble in the ethyl alcohol) by evaporating the alcohol. The metal oxides 40 to be regenerated, filtered and washed, are ready to be sent to the regenerator, through the container and the screw feeder 43.

In the screw feeder 43 the metal oxides 40 to be regenerated are preheated at a temperature of about 120-250°C by the hot fumes produced by the regeneration process. The preheating of the metal oxides 40 to be regenerated before starting the actual regeneration process increases the thermal efficiency of the same.

From the screw feeder 43 the metal oxides 40 to be regenerated reach the reaction chamber where they are exposed to a hot gaseous flow containing CO and/or H₂ coming from the gasification chamber 16.

The contact between the oxides contained in the reaction chamber 15 and the abovementioned gases, reaching the reaction chamber at temperatures varying between 900 and 1000°C, allows the reduction of the metal oxides 40. The regeneration is thus performed exposing the tin oxide to a hot gaseous flow containing CO and/or hydrogen according to the following reactions:

SnO2 + 2 CO → Sn + 2 CO2

SnO2 + 2 H2 → Sn + 2 H2O

Considering the temperatures reached, the metal so produced is present in liquid form and flows downwards because of the gravity so as to be collected in the container 62, from where it is then extracted from the regenerator and directly cast into suitable moulds 61 having the form of the fresh electrodes to be used in the batteries 1.

It is noted that not the whole carbon monoxide CO and H₂ contained in the gas are exploited for the reduction of the metal oxides. The remaining part of such gases that leave the reaction chamber 15 flows then in the post-combustion chamber 16 which have refractory walls suitable for withstanding the high temperatures of this region. To this chamber is further sent fresh air which allows the complete combustion of the residual carbon monoxide and hydrogen. Therefore, only hot fumes consisting of carbon dioxide, water, oxygen and nitrogen leave the post-combustion chamber 17. As already explained above, the heat of such fumes is first recovered in the heat exchanger and then in the duct 44 surrounding the screw feeder 43 for transporting the metal oxides 40. The production of the hot gaseous flow containing CO and/or hydrogen required for the reduction of the oxides takes place in the gasification chamber 16 by means of fuel fed by the screw feeder 35.

To this purpose, air is blown from the bottom of the gasification chamber 16 in an amount noticeably lower than that required for the stoichiometric combustion of all of the fuel. Such air is initially heated at temperatures sufficient to allow ignition, for example by means of a resistor or a gas burner or other means not shown in the figure. After ignition, the blown air allows the combustion of part of the fuel while the remaining part is gasified, thus transformed in a gas containing carbon monoxide and, sometimes, hydrogen, which are then sent to the reaction chamber 15.

The air is blown into the gasification chamber with the aid of the fan 32.

Downstream the fan 32 the air is preheated in the heat exchanger 45 through which also the hot fumes F coming from the post-combustion chamber 17 flow, thus allowing an increase in the thermal efficiency of the apparatus.

The ashes contained in the exhausted fuel fall through the grid 37 and are extracted through the leak-tight discharge opening 30 and collected in the container 31, for then being disposed of in a dump site.

When the fuel is coal, the following chemical reactions take place:

C + O2 → CO2

C + CO2 → 2 CO

C + H2O → CO + H2O

CO + H2O ←→ CO2 + H2

The oxygen required for the reactions is provided in form of air from the environment.

The water required for the reactions can be provided as liquid water or steam.

As previously mentioned, the hot fumes coming from the reaction chamber 15, allow, while cooling down, the metal oxides 40 to be preheated before starting the actual regeneration process, thus increasing the thermal efficiency of the apparatus and are then sent to the dedusting unit 47,48 through the duct 46.

The dedusting unit 47,48 is used to extract from the fumes F all of the solid particulate entrained therein.

In detail, from the fumes F is first extracted the coarser and higher density dust, mainly consisting of oxides and already regenerated metal entrained by the fumes F from the reaction chamber 15. Such dust is extracted from the bottom of cyclone 47 and collected in a container 51. Such dust will be then fed again into the regeneration cycle by mixing it with the metal oxides 40 which enter the regenerator 50.

Subsequently, from the fumes F is extracted the remaining particulate, consisting of finer and lower density dust, thus ashes contained in the fuel used for regeneration. Such ashes are extracted from the bottom of the cyclone 48 through an airtight system 52 and collected in the container 53. These will be then disposed of in a dump site.

The fumes downstream the dedusting system can then be sent to the atmosphere through the chimney 54. Preferably, before being sent to the chimney 54, such fumes F are preferably made to flow through an exchanger 55, which allows the still relevant thermal content of the abovementioned fumes F to be recovered.

## Claims

1. System for producing electrical energy from fuel comprising:
- at least one metal-air battery (1) producing electrical energy comprising at least one metal electrode (2) adapted to oxidize by chemical discharge reactions of the said metal-air battery (1), at least one air electrode (4) and an electrolyte (3) based on alkaline aqueous solution contacting said metal electrode (2) and said air electrode (3);
- at least one regenerator (50) adapted to receive metal oxide (40) deriving from the discharge reactions of the battery (1);
- said regenerator (50) comprising a gasification chamber (16) for receiving fuel and converting it into a hot gaseous flow containing CO and/or H₂;
- elements for making the said hot gaseous flow to contact the said metal oxides (40) for a time and at a temperature effective to regenerate by reduction and convert the metal oxides (40) into regenerated metal in liquid state;
- extraction and casting devices (61;62;63;64) for extracting the said molten regenerated metal from the regenerator and casting it in the form of a fresh electrode of a size suitable for allowing it to be received by said metal-air battery (1);
- at least one metal-air battery for receiving said electrode made of regenerated and cast metal.

2. System according to claim 1, **characterized in that** said metal electrode (2) comprises a metal having a melting point lower than 450°C and a boiling point higher than 1500°C.

3. System according to claim 1 or 2, **characterized by** comprising at least one unit for separating the said metal oxides (40) from stannate present in solution in the electrolyte of the said metal-air battery (1) due to the chemical discharge reactions of the battery itself.

4. System according to claim 3, **characterized in that** said unit for separating said metal oxides (40) from the stannate comprises at least one autoclave (29).

5. System according to claim 3 or 4, **characterized by** comprising at least one device (41,42,43,44,13) for feeding the said metal oxides (40) extracted from the said stannate into the said regenerator (50).

6. System according to anyone of the previous claims, **characterized in that** said regenerator (50) comprises a reaction chamber (15) positioned above and connected with said gasification chamber (16) and a post-combustion chamber (17) positioned outside and connected with said reaction chamber (15).

7. System according to anyone of the previous claims, **characterized by** comprising a device (67;35) for feeding the fuel into the said gasification chamber (16).

8. System according to anyone of the previous claims, **characterized by** comprising at least one device (70) for blowing air into said regenerator (50).

9. System according to claim 8, **characterized in that** said at least one air blowing device comprises at least one duct (38) for taking in air from outside, at least one fan (32) upstream the said intake duct, at least one heat exchanger (45) for heating the air coming from outside and at least one duct (36) for feeding the air heated by the said exchanger (45) into the said regenerator (50).

10. System according to anyone of the previous claims **characterized by** comprising at least one combustion fumes dedusting unit (60) for extracting from combustion fumes (F) all of the solid particulate entrained therein.

11. System according to claim 10, **characterized in that** said at least combustion fume dedusting unit (60) comprises at least two separation cyclones of the inertial type in series, of which the first cyclone (47) has a separation efficiency lower than the second cyclone (48).

12. System according to anyone of the previous claims, **characterized in that** said fuel is selected from coke, charcoal, pit coal, biomass containing wood or a mixture thereof.

13. Process for producing electrical energy from fuel in a system comprising at least one regenerator (50), at least one mould (61) for a metal electrode (2), at least one metal-air battery (1) provided with said metal electrode (2), said metal electrode (2) having a melting point lower than 450°C and a boiling point higher than 1500°C, comprising the steps of:
a) extracting electrolyte from at least one metal-air battery (1), said electrolyte comprising dissolved stannates deriving from the discharge reaction of a metal electrode (2);
b) extracting metal oxides (40) from said stannates;
c) feeding said metal oxides (40) into a regenerator (50);
d) exposing said metal oxides (40) to a hot gas flow containing CO and H₂ at a temperature between 800 and 1200°C for a time effective to regenerate by reduction and convert the metal oxides (40) into regenerated metal in liquid state (41);
d) casting said molten metal (41) in the form of an electrode (2) of a size suitable for allowing it to be received by said metal-air battery (1);
e) inserting said cast electrode (2) into said battery (1).

14. Process according to claim 13, **characterized by** comprising a step of preheating said metal oxides (40) at a temperature between 120 and 250°C before introducing said metal oxides (40) into said reactor (50).

15. Process according to claim 13 or 14, **characterized by** comprising a step of generating the said gas flow containing CO and/or H2.

16. Process according to claim 15, **characterized in that** said step of generating the said gas flow containing CO and/or H2 comprises the steps of:
- feeding fuel and a hot air flow into a gasification chamber (16);
- igniting the fuel;
- burning for a predetermined time the said fuel exposed to the hot air flow.

17. Process according to any one of the previous claims 13 to 16, **characterized by** comprising a step of extracting from combustion fumes coming from the regenerator (50) the solid particulate entrained therein.

18. Metal-air battery comprising:
at least a containment element (5);
at least one electrolyte (3) based on an alkaline aqueous solution contained in the said containment element (5);
at least one metal electrode (2);
at least one air electrode (4);
**characterized in that** the metal electrode (2) has a melting point lower than 450°C and a boiling point higher than 1500°C.

19. Metal-air battery (1) according to claim 18, **characterized in that** said metal electrode essentially comprises tin.

20. Metal-air battery (1) according to claim 18, **characterized in that** said metal electrode essentially comprises lead Pb.

21. Metal-air battery (1) according to claim 18, **characterized in that** said air electrode (4) comprises a multilayer plate element (10).

22. Metal-air battery (1) according to anyone of the previous claims 18 to 21, **characterized in that** said electrolyte (3) comprises potassium hydroxide KOH in aqueous solution.
